# EUROPÄISCHE PATENTSCHRIFT

(11) **EP 3 759 368 B1**
(45) Veröffentlichungstag und Bekanntmachung des Hinweises auf die Patenterteilung: **20.07.2022**
(21) Anmeldenummer: 19705925.6
(22) Anmeldetag: 29.01.2019
(51) Int. Cl.: F16D 21/06, B60K 6/387, B60K 6/40, B60K 6/48, F16D 25/0638, F16D 25/08, F16D 25/10

(54) **KUPPLUNGSANORDNUNG MIT ZUSÄTZLICHEM STÜTZLAGER; SOWIE ANTRIEBSEINHEIT**
COUPLING ARRANGEMENT WITH ADDITIONAL SUPPORT BEARING; AND DRIVE UNIT
DISPOSITIF D'ACCOUPLEMENT AVEC PALIER D'APPUI SUPPLÉMENTAIRE ; ET UNITÉ D'ENTRAÎNEMENT

(30) Priorität: 27.02.2018 DE 102018104361
(43) Veröffentlichungstag der Anmeldung: 06.01.2021
(73) Patentinhaber: Schaeffler Technologies AG & Co. KG, 91074 Herzogenaurach (DE)
(72) Erfinder: WEIS, Dominik, 77815 Bühl (DE); LEHMANN, Steffen, 76275 Ettlingen (DE)
(86) Internationale Anmeldenummer: PCT/DE2019/100090
(87) Internationale Veröffentlichungsnummer: WO 2019/166044

(56) Entgegenhaltungen:
- WO-A1-2017/186227
- WO-A1-2018/024281
- CN-A- 103 098 351
- US-A1- 2017 261 045

## Beschreibung

Die Erfindung betrifft eine Kupplungsanordnung (auch als Hybridmodul bezeichnet) für einen Antriebsstrang eines Kraftfahrzeuges, wie eines Pkws, Lkws, Busses oder sonstigen Nutzfahrzeuges, mit einem Gehäuse, einem relativ zu dem Gehäuse drehbar gelagerten Träger, einer mit ihrem Rotor drehfest an dem Träger aufgenommenen / angebrachten elektrischen Maschine, mehreren Kupplungen, wobei auch jede Kupplung mit einem Kupplungsbestandteil an dem Träger drehfest aufgenommen / angebracht ist, sowie zumindest einem betätigend auf eine Kupplung / eine der Kupplungen einwirkenden Nehmerzylinder, wobei ein, die Lagerung des Träges mit ausbildendes, erstes (radiales) Stützlager direkt zwischen dem Träger und dem Gehäuse angeordnet / eingesetzt ist. Zudem betrifft die Erfindung eine Antriebseinheit für einen Antriebsstrang eines Kraftfahrzeuges, mit dieser Kupplungsanordnung.

Gattungsgemäße Kupplungsanordnungen sind aus dem Stand der Technik bereits hinlänglich bekannt. In diesem Zusammenhang offenbart bspw. die WO 2017/ 008 806 A1 ein Hybridmodul für einen Antriebsstrang und eine Montage dieses Hybridmoduls. Weitere Kupplungsanordnungen sind auch von WO 2017/186227 A1 und WO 2018/024281 A1 bekannt.

Folglich sind aus dem Stand der Technik verschiedene bereits als Dreifachkupplungen ausgebildete Hybridmodule bekannt, deren Träger am Gehäuse gelagert sind. Aus bisherigen Ausführungen hat es sich jedoch als Nachteil herausgestellt, dass die Lagerstellen seitens des Trägers häufig so positioniert sind und, dass das Gehäuse derart steif ausgebildet ist, dass der Rotor der elektrischen Maschine in manchen Betriebszuständen seine radiale Lage verändert. Dies hat zur Folge, dass sich ein Luftspalt der elektrischen Maschine, d.h. ein Luftspalt zwischen dem Rotor und einem Stator der elektrischen Maschine, beeinflussen lässt. Auch die Antriebsleistung der elektrischen Maschine wird dadurch nachteilig beeinflusst.

Es ist daher Aufgabe der vorliegenden Erfindung, die aus dem Stand der Technik bekannten Nachteile zu beheben und insbesondere eine Kupplungsanordnung zur Verfügung zu stellen, die eine über den gesamten Betrieb hinweg möglichst robuste Abstützung des Rotors gewährleistet.

Dies wird erfindungsgemäß dadurch gelöst, dass der Träger mit einem weiteren, entlang einer Drehachse des Trägers (d.h. in axialer Richtung des Trägers) beabstandet zu dem ersten Stützlager angeordneten, zweiten (radialen) Stützlager ausgestattet ist, und das zweite Stützlager zwischen dem Träger und einem Aktorgehäuse des zumindest einen Nehmerzylinders eingesetzt ist.

Dadurch werden der Träger sowie der mit diesem Träger gekoppelte Rotor im Betrieb deutlich stabiler über zwei Stützlager radial abgestützt. Der Rotor neigt daher im Betrieb deutlich weniger, einen Abstand relativ zu dem Stator der elektrischen Maschine zu verändern.

Weitere vorteilhafte Ausführungsformen sind mit den Unteransprüchen beansprucht und nachfolgend näher erläutert.

Ist das erste Stützlager zu einer ersten axialen Seite hin neben mehreren Reibelementen einer der Kupplungen angeordnet und das zweite Stützlager zu einer, der ersten axialen Seite abgewandten, zweiten axialen Seite hin neben den Reibelementen der Kupplung angeordnet, sind der Träger und der Rotor noch robuster abgestützt.

Das erste Stützlager ist entweder rein als radiales Lager / Radiallager oder weiter bevorzugt als ein axiales und radiales Lager / Axial- und Radiallager ausgebildet. Auch das zweite Stützlager ist entweder rein als radiales Lager / Radiallager oder weiter bevorzugt als ein axiales und radiales Lager / Axial- und Radiallager ausgebildet

Das erste Stützlager und/oder das zweite Stützlager sind/ist zweckmäßigerweise als ein Kugellager (weiter bevorzugt Rillenkugellager) ausgebildet.

Erfindungsgemäß , ist das zweite Stützlager zwischen dem Träger und einem Aktorgehäuse des zumindest einen Nehmerzylinders eingesetzt. Durch die Integration des zweiten Stützlagers an dem Aktorgehäuse wird weiterer axialer Bauraum eingespart.

In diesem Zusammenhang ist es auch von Vorteil, wenn das zweite Stützlager zwischen dem Träger und einer radialen Außenseite des Aktorgehäuses (direkt) eingesetzt ist. Dadurch lässt sich eine Aufnahme des zweiten Stützlagers an dem Aktorgehäuse relativ einfach ausgestalten.

Zweckmäßig ist es weiterhin, wenn das Aktorgehäuse zwei Nehmerzylinder aufweist, wobei zwei jeweils durch einen Gehäusebereich und einen Kolben begrenzte Fluidräume der Nehmerzylinder in radialer Richtung geschachtelt, d.h. in radialer Richtung zueinander versetzt (bevorzugt koaxial zueinander) angeordnet sind. Dadurch lassen sich die Betätigungen für zwei Kupplungen besonders geschickt anordnen.

Vorteilhaft ist es zudem, wenn das zweite Stützlager in axialer Richtung zumindest teilweise mit einem Fluidraum des zumindest einen Nehmerzylinders überlappend / überdeckend (d.h. auf gleicher axialer Höhe) angeordnet ist. Dadurch wird der axiale Bauraumbedarf weiter gesenkt.

Ist das erste Stützlager an einer sich in radialer Richtung an dem Rotor und/oder an mehreren Reibelementen zumindest einer Kupplung oder mehrerer Kupplungen vorbei erstreckenden Zwischenwand des Gehäuses aufgenommen, wird eine kompakte Ausbildung des Gehäuses eingesetzt.

In diesem Zusammenhang ist es weiterhin zweckmäßig, wenn in der Zwischenwand eine Fluidversorgung einer eine erste Kupplung betätigenden Betätigungseinheit zumindest abschnittsweise vorgesehen ist.

Zudem betrifft die Erfindung eine Antriebseinheit für einen Antriebsstrang eines Kraftfahrzeuges, mit einer erfindungsgemäßen Kupplungsanordnung nach zumindest einer der zuvor beschriebenen Ausführungen sowie einer Getriebeeinrichtung, wobei zumindest eine Getriebeeingangswelle der Getriebeeinrichtung mit einem Kupplungsbestandteil einer Kupplung der Kupplungsanordnung drehfest verbunden ist.

In diesem Zusammenhang ist es für die Montage weiterhin zuträglich, wenn die Getriebeeinrichtung ein fest mit dem Gehäuse der Kupplungsanordnung verbundenes Getriebegehäuse aufweist und der zumindest eine Nehmerzylinder an einem getriebegehäusefesten Bereich aufgenommen ist.

Das Aktorgehäuse ist vorteilhafterweise direkt oder (indirekt) über ein Verbindungselement, wie eine Zwischenplatte, an dem getriebegehäusefesten Bereich angebracht.

In anderen Worten ausgedrückt, ist somit erfindungsgemäß eine Dreifachkupplung (drei Kupplungen) mit zusätzlicher Lagerung auf der Getriebeseite realisiert. Insbesondere weist eine als Hybridmodul umgesetzte Kupplungsanordnung einen Rotor sowie eine Dreifachkupplung auf, die an ihren beiden (axialen) Seiten abgestützt sind. Ein erstes Lager (erstes Stützlager) ist zu einer (axialen) Seite hin angeordnet, die mit einer Verbrennungskraftmaschine verbindbar ist und ein zweites Lager (zweites Stützlager) ist zu einer (axialen) Seite hin vorgesehen, die mit einem Getriebe verbindbar ist. Das zweite Lager ist radial durch einen Doppelnehmerzylinder zum Betätigen zweier Teilkupplungen (zweite und dritte Kupplung) einer Doppelkupplung abgestützt.

Die Erfindung wird nun nachfolgend anhand von einer Figur näher erläutert.

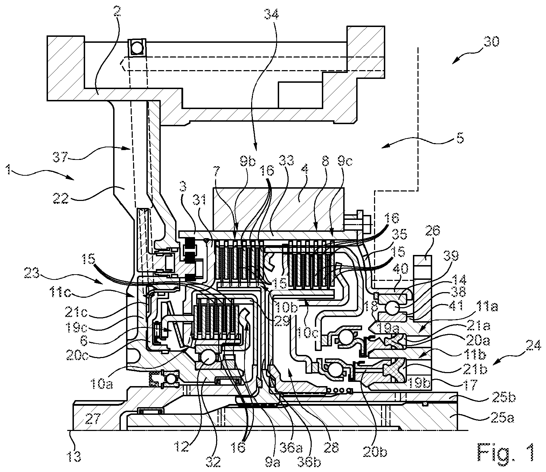

Es zeigt die einzige
Fig. 1 eine Längsschnittdarstellung einer erfindungsgemäßen Kupplungsanordnung.

Die Figur ist lediglich schematischer Natur und dient ausschließlich dem Verständnis der Erfindung.

In Fig. 1 ist eine erfindungsgemäße Kupplungsanordnung 1 nach einem bevorzugten Ausführungsbeispiel in ihrem Aufbau gut zu erkennen. Die Kupplungsanordnung 1 ist Teil einer Antriebseinheit 30. Die Antriebseinheit 30 ist im Betrieb auf typische Weise in einem Antriebsstrang eines Kraftfahrzeuges eingesetzt. Die Antriebseinheit 30 bildet eine Einheit aus der Kupplungsanordnung 1 sowie einer Getriebeeinrichtung 24. Seitens der Getriebeeinrichtung 24 sind der Übersichtlichkeit halber lediglich zwei Getriebeeingangswellen 25a, 25b, die drehbar in einem Getriebegehäuse der Getriebeeinrichtung 24 gelagert sind, veranschaulicht. Wie nachfolgend näher beschrieben, ist die Kupplungsanordnung 1 als ein Hybridmodul ausgeführt.

Die Kupplungsanordnung 1 weist insgesamt drei Kupplungen 6, 7, 8 auf. Die Kupplungsanordnung 1 ist daher auch als Dreifachkupplung bezeichnet. Eine erste Kupplung 6 ist in Form einer Trennkupplung seitens eines Eingangs der Kupplungsanordnung 1 angeordnet. Der Eingang der Kupplungsanordnung 1 ist jener Bereich, der im Betrieb mit einer der Übersichtlichkeit halber nicht dargestellten Verbrennungskraftmaschine rotatorisch gekoppelt ist. Eine zweite Kupplung 7 sowie eine dritte Kupplung 8 bilden gemeinsam eine Doppelkupplung aus, die mit den beiden Getriebeeingangswellen 25a, 25b weiterhin zusammenwirkt.

Eingangsseitig der Kupplungsanordnung 1 ist ein Eingangsteil 27 vorgesehen. Das Eingangsteil 27 (auch als Verbindungs- / Zwischenteil bezeichnet) ist im Betrieb unmittelbar oder mittelbar mit einer Ausgangswelle der Verbrennungskraftmaschine drehfest verbunden. Das Eingangsteil 27 ist entweder unmittelbar an der Ausgangswelle der Verbrennungskraftmaschine drehfest angebracht oder mittelbar mittels einer Drehschwingungsdämpfeinrichtung, wie einem Zweimassenschwungrad, mit der Ausgangswelle gekoppelt / verbunden. Das Eingangsteil 27 ist drehbar an einem Gehäuse 2 der Kupplungsanordnung 1 gelagert. Das Eingangsteil 27 ragt von einer axialen Außenseite des Gehäuses 2 (auch als Kupplungsgehäuse bezeichnet) in einen Innenraum 28 des Gehäuses 2 hinein. Insbesondere durchragt das Eingangsteil 27 eine sich in radialer Richtung erstreckende Zwischenwand 22 des Gehäuses 2.

In dem Innenraum 28 bildet das Eingangsteil 27 einen ersten Kupplungsbestandteil 9a der ersten Kupplung 6 mit aus. Das Eingangsteil 27 weist hierzu einen Tragbereich 29 des ersten Kupplungsbestandteils 9a der ersten Kupplung 6 auf. An dem Tragbereich 29 sind mehrere erste Reibelemente 15 der ersten Kupplung 6 drehfest sowie in axialer Richtung relativ zueinander verschieblich aufgenommen. An einem weiteren zweiten Kupplungsbestandteil 10a der ersten Kupplung 6 sind mehrere zweite Reibelemente 16 vorgesehen. Die zweiten Reibelemente 16 der ersten Kupplung 6 sind an einem Träger 3 drehfest sowie relativ zueinander axial verschieblich aufgenommen. Somit ist der zweite Kupplungsbestandteil 10a der ersten Kupplung 6 an dem Träger 3 aufgenommen. Der Träger 3 weist einen sich in radialer Richtung erstreckenden ersten Stützabschnitt 31 auf, welcher erste Stützabschnitt 31 diesen zweiten Kupplungsbestandteil 10a der ersten Kupplung 6 ausbildet / aufnimmt. Der erste Stützabschnitt 31 ist mittels eines ersten Stützlagers 12 unmittelbar an dem Gehäuse 2 / der Zwischenwand 22 in radialer Richtung abgestützt / gelagert. Die Zwischenwand 22 bildet hierfür einen, die Reibelemente 15, 16 der ersten Kupplung 6 in axialer Richtung von radial innen überdeckenden Tragabschnitt 32 auf. Das erste Stützlager 12 ist in einem radialen Zwischenraum zwischen dem Tragabschnitt 32 und einer radialen Innenseite des ersten Stützabschnittes 31 angeordnet. Das erste Stützlager 12 an sich ist radial innerhalb der Reibelemente 15, 16 der ersten Kupplung 6 angeordnet. Auch ist das erste Stützlager 12 so seitens des ersten Stützabschnittes 31 sowie des Gehäuses 2 axial abgestützt, dass es als Axiallager wirkt.

Der zweite Stützbereich 31 ist weiterhin drehfest mit einem sich in axialer Richtung erstreckenden (hülsenförmigen) Aufnahmeabschnitt 33 des Trägers 3 drehfest weiter verbunden. Zu diesem Zweck ist der erste Stützabschnitt 31 in dieser Ausführung an dem Aufnahmeabschnitt 33 angeschweißt. An dem Aufnahmeabschnitt 33 ist unmittelbar drehfest ein Rotor 4 einer elektrischen Maschine 5, die ebenfalls Bestandteil der Kupplungsanordnung 1 ist, aufgenommen. Der Rotor 4 ist auf einer radialen Außenseite des Aufnahmeabschnittes 33 befestigt. Ein Stator 34 der elektrischen Maschine 5, gegenüber dem der Rotor 4 verdrehbar ist, ist fest mit dem Gehäuse 2 verbunden / in dem Gehäuse 2 fest aufgenommen. Somit ist die elektrische Maschine 5 mit ihrem Rotor 4 koaxial zu einer Drehachse 13, um die der Träger 3 drehbar gelagert ist und auf die die verwendeten radialen und axialen Richtungen bezogen sind, angeordnet.

An einem dem ersten Stützabschnitt 31 axial abgewandten Ende des Aufnahmeabschnittes 33 ist ein weiterer zweiter Stützabschnitt 35 des Trägers 3 angeordnet. Auch dieser zweite Stützabschnitt 35 erstreckt sich, wie bereits der erste Stützabschnitt 31 von dem Aufnahmeabschnitt 33 in radialer Richtung nach innen. Der zweite Stützabschnitt 35 ist in dieser Ausführung mittels einer Verschraubung an den Aufnahmeabschnitt 33 angebracht.

Erfindungsgemäß ist an dem Träger 3, nämlich an dem zweiten Stützabschnitt 35, ein zweites Stützlager 14 angeordnet, das in axialer Richtung beabstandet zu dem ersten Stützlager 12 positioniert ist. Wie auch das erste Stützlager 12, ist das zweite Stützlager 14 in Form eines Kugellagers ausgebildet. Jedoch ist es prinzipiell auch möglich, die beiden Stützlager 12, 14 auf andere Weise auszubilden. Wie auch das erste Stützlager 12, ist das zweite Stützlager 14 als Axial- und Radiallager ausgeführt. Somit ist der Träger 3 über zwei in axialer Richtung beabstandet zueinander angeordneter Stützlager 12, 14 im Betrieb radial abgestützt / gelagert.

Der Träger 3 ist auch mit den beiden weiteren Kupplungen 7, 8 verbunden. Der Träger 3, nämlich der Aufnahmeabschnitt 33, nimmt unmittelbar einen ersten Kupplungsbestandteil 9b, 9c der zweiten Kupplung 7 und der dritten Kupplung 8 auf.

Dem entsprechend ist ein erster Kupplungsbestandteil 9b der zweiten Kupplung 7 unmittelbar an einer radialen Innenseite des Aufnahmeabschnittes 33 aufgenommen. Mehrere erste Reibelemente 15 der zweiten Kupplung 7 sind drehfest sowie relativ zueinander axial verschieblich an dem Träger 3 / dem Aufnahmeabschnitt 33 aufgenommen. Ein zweiter Kupplungsbestandteil 10b der zweiten Kupplung 7 ist drehfest mit einer ersten Getriebeeingangswelle 25a der Getriebeeinrichtung 24 weiter verbunden. Der zweite Kupplungsbestandteil 10b der zweiten Kupplung 7 weist mehrere (zweite) Reibelemente 16 auf, die drehfest sowie relativ zueinander axial verschieblich an einem ersten Reibelementeträger 36a (des zweiten Kupplungsbestandteils 10b) angebracht sind. Der erste Reibelementeträger 36a ist direkt weiter drehfest mit der ersten Getriebeeingangswelle 25a verbunden.

Entsprechend der zweiten Kupplung 7 ist die dritte Kupplung 8 aufgebaut. Die dritte Kupplung 8 ist mit ihren Reibelementen 15, 16 in axialer Richtung gesehen neben den Reibelementen 15, 16 der zweiten Kupplung 7 angeordnet. Die zweite Kupplung 7 ist zudem mit ihren Reibelementen 15, 16 radial außerhalb der Reibelemente 15, 16 der ersten Kupplung 6 angeordnet. Auch sind die Reibelemente 15, 16 der dritten Kupplung 8 radial außerhalb der Reibelemente 15, 16 der ersten Kupplung 6 angeordnet. Ein erster Kupplungsbestandteil 9c der dritten Kupplung 8 ist direkt an dem Träger 3 / dem Aufnahmeabschnitt 33 aufgenommen. Der erste Kupplungsbestandteil 9c ist, wie bereits der erste Kupplungsbestandteil 9b der zweiten Kupplung 7, unmittelbar an der radialen Innenseite des Aufnahmeabschnittes 33 vorgesehen. Mehrere erste Reibelemente 15 der dritten Kupplung 8, die Bestandteil des ersten Kupplungsbestandteils 9c sind, sind drehfest sowie axial relativ zueinander verschieblich an dem Aufnahmeabschnitt 33 aufgenommen. Ein zweiter Kupplungsbestandteil 10c der dritten Kupplung 8 weist mehrere zweite Reibelemente 16 auf, die drehfest sowie axial relativ zueinander verschieblich an einem zweiten Reibelementeträger 36b der dritten Kupplung 8 aufgenommen sind. Der zweite Reibelementeträger 36b ist mit der zweiten Getriebeeingangswelle 25b weiter verbunden.

Die Reibelemente 15, 16 der jeweiligen Kupplungen 6, 7, 8 wechseln sich in axialer Richtung je Kupplung 6, 7, 8 ab. In einer geschlossenen Stellung der jeweiligen Kupplung 6, 7, 8 sind deren Reibelemente 15, 16 in axialer Richtung reibkraftschlüssig aneinander angedrückt, sodass es zu einem drehfesten Verbund des jeweiligen ersten Kupplungsbestandteils 9a, 9b, 9c mit dem zweiten Kupplungsbestandteil 10a, 10b, 10c kommt. In einer geöffneten Stellung der jeweiligen Kupplung 6, 7, 8 sind deren Reibelemente 15, 16 dann so relativ zueinander beabstandet angeordnet, dass deren erster Kupplungsbestandteil 9a, 9b, 9c von dem zweiten Kupplungsbestandteil 10a, 10b, 10c rotatorisch entkoppelt ist.

Hinsichtlich der Positionierung der beiden Stützlager 12, 14 relativ zueinander sowie relativ zu den Reibelementen 15, 16 ist erkennbar, dass das erste Stützlager 12 zu einer ersten axialen Seite hin neben den Reibelementen 15, 16 der dritten Kupplung 8 vollständig angeordnet ist. Das zweite Stützlager 14 ist hingegen vollständig zu einer, der ersten axialen Seite abgewandten, zweiten axialen Seite dieser Reibelemente 15, 16 der dritten Kupplung 8 hin angeordnet. Da das erste Stützlager 12 mit seinen Bestandteilen (Lagerringe und Wälzkörper) die Reibelemente 15, 16 der ersten Kupplung 6 sowie der zweiten Kupplung 7 in axialer Richtung zumindest teilweise (radial von innen) überdeckt / überlappt, ist das erste Stützlager 12 lediglich in Bezug auf manche Reibelemente 15, 16 der zweiten und dritten Kupplung 7, 8 versetzt zu der ersten axialen Seite hin angeordnet. Das zweite Stützlager 14 ist jedoch für alle Reibelemente 15, 16 der zweiten und dritten Kupplungen 7, 8 versetzt zu der zweiten axialen Seite hin angeordnet.

Zur Betätigung der ersten Kupplung 6 ist eine Betätigungseinheit 23 vorgesehen. Die Betätigungseinheit 23 weist einen Nehmerzylinder 11c, der als konzentrischer Nehmerzylinder ausgeführt ist, auf. Dieser als dritte Nehmerzylinder 11c bezeichnete Nehmerzylinder 11c ist als ein hydraulischer Nehmerzylinder 11c ausgeführt. Der dritte Nehmerzylinder 11c ist hinsichtlich seines (dritten) Fluidraums 21c an eine Fluidversorgung / Hydraulikversorgung angeschlossen. Diese Fluidversorgung ist teilweise in der Zwischenwand 22 mit ausgebildet. Insbesondere ist ein Leitkanal 37 dieser Fluidversorgung in der Zwischenwand 22 integriert. Somit, da die Zwischenwand 22 den Rotor 4 sowie die Reibelemente 15, 16 der Kupplungen 6, 7, 8 in radialer Richtung überragt, wird ein Fluid im Betrieb von einer radialen Außenseite des Rotors 4 / der elektrischen Maschine 5 in einen radialen Bereich der ersten Kupplung 6 eingeleitet. Ein den dritten Fluidraum 21c gemeinsam mit einem (dritten) Gehäusebereich 19c ausbildender (dritter) Kolben 20c ist in der Zwischenwand 22 verschiebbar aufgenommen. Dadurch dient die Betätigungseinheit 23 zum Verstellen der ersten Kupplung 6 zwischen ihrer geöffneten und geschlossenen Stellung.

Zur Betätigung der zweiten Kupplung 7 sowie der dritten Kupplung 8 ist in dieser Ausführung eine Nehmerzylindereinheit in Form eines Doppelnehmerzylinders, d.h. mit zwei miteinander in einem Modul integrierten Nehmerzylindern 11a, 11b, umgesetzt. Ein die zweite Kupplung 7 betätigender erster Nehmerzylinder 11a ist somit gemeinsam mit einem die dritte Kupplung 8 betätigenden zweiten Nehmerzylinder 11b ausgebildet. Beide Nehmerzylinder 11a, 11b sind gemeinsam in einem Aktorgehäuse 17 aufgenommen. Demnach sind ein erster Gehäusebereich 19a und ein zweiter Gehäusebereich 19b der Nehmerzylinder 11a, 11b gemeinsam in dem Aktorgehäuse 17 integriert. Sowohl in dem ersten Gehäusebereich 19a als auch in dem zweiten Gehäusebereich 19b ist ein (erster bzw. zweiter) Kolben 20a, 20b verschieblich geführt, der zusammen mit dem (ersten oder zweiten) Gehäusebereich 19a bzw. 19b einen (ersten oder zweiten) Fluidraum 21a, 21b ausbildet. Die beiden Nehmerzylinder 11a, 11b, d.h. die Gehäusebereiche 19a, 19b der beiden Nehmerzylinder 11a, 11b sind radial geschachtelt zueinander angeordnet. Ein erster Gehäusebereich 19a des ersten Nehmerzylinders 11a ist radial außerhalb eines zweiten Gehäusebereiches 19b des zweiten Nehmerzylinders 11b angeordnet. Da jeder Nehmerzylinder 11a, 11b als konzentrische Nehmerzylinder ausgebildet ist, sind die Nehmerzylinder 11a, 11b, d.h. die Gehäusebereiche 19a, 19b, koaxial relativ zueinander angeordnet.

Wie in Fig. 1 zu erkennen, ist das zweite Stützlager 14 in einer radialen Richtung gesehen zwischen dem zweiten Stützabschnitt 35 und einer radialen Außenseite 18 des Aktorgehäuses 17 angeordnet. Hierzu ist ein erster Lagerring 38 des zweiten Stützlagers 14 drehfest auf der Außenseite 18 / einem Außendurchmesser des Aktorgehäuses 17 angebracht (aufgepresst). Der erste Lagerring 38 ist zusätzlich zu einer axialen Seite an einem (radialen) Absatz 41 (auch als Schulter bezeichnet) an dem Aktorgehäuse 17 abgestützt. Ein relativ zu dem ersten Lagerring 38 wälzgelagerter zweiter Lagerring 39 ist an einer radialen Innenseite eines sich in axialer Richtung erstreckenden Lagerbereichs 40 des zweiten Stützabschnittes 35 drehfest aufgenommen (eingepresst). Der zweite Lagerring 39 ist in axialer Richtung fest an der radialen Innenseite des zweiten Stützabschnittes 35 / des Lagerbereichs 40 aufgenommen.

Das zweite Stützlager 14 ist so auf dem Aktorgehäuse 17 aufgenommen, dass die Fluidräume 21a, 21b in radialer Richtung innerhalb des zweiten Stützlagers 14 angeordnet sind. Zudem ist das zweite Stützlager 14 in axialer Richtung auf der gleichen Höhe wie die Fluidräume 21a, 21b angeordnet. Der erste Lagerring 38 überlappt daher die Fluidräume 21a, 21b in axialer Richtung zumindest teilweise.

Das Aktorgehäuse 17 ist in dieser Ausführung mit einer Zwischenplatte 26 weiter verbunden. Die Zwischenplatte 26 dient im Betrieb auf typische Weise zum Befestigen des Aktorgehäuses 17 an dem Getriebegehäuse der Getriebeeinrichtung 24. Prinzipiell ist es auch möglich, gemäß weiteren Ausführungen, das Aktorgehäuse 17 direkt an dem Getriebegehäuse zu befestigen.

In anderen Worten ausgedrückt, sind somit zwei Lagerstellen durch das erste Stützlager 12 und das zweite Stützlager 14 für den Rotor 4 integriert. Somit ist auch eine zweite Lagerstelle (zweites Stützlager 14) des Rotors 4 auf der Getriebeseite integriert. Die zweite Lagerstelle 14 des Rotors 4 befindet sich weiter bevorzugt an einem Außendurchmesser (radiale Außenseite 18) des Doppel-CSCs / der beiden Nehmerzylinder 11a, 11b. Das CSC 11a, 11b wird an das Getriebegehäuse oder eine Zwischenplatte 26 verschraubt. Dadurch ergibt sich im Betrieb die zweite Lagerstelle 14 auf der Getriebeseite.

Das Hybridmodul (Kupplungsanordnung 1) zeichnet sich insbesondere dadurch aus, dass der Rotor 4 / die Dreifachkupplung 6, 7, 8 beidseitig gelagert sind. Dies ist ersichtlich durch eine (erste) Lagerstelle 12 auf der Motorseite und eine zweite Lagerstelle 14 auf der Getriebeseite. Die zweite Lagerstelle 14 stützt sich dabei auf den Doppel-CSC 11a, 11b radial ab. Das Doppel-CSC wird dabei an eine Grundplatte auf die Getriebeseite geschraubt. Dadurch wird die Zwischenwand 22 des Gehäuses 2 entlastet und kann dünner ausgestaltet werden.

### Bezugszeichenliste

- 1: Kupplungsanordnung
- 2: Gehäuse
- 3: Träger
- 4: Rotor
- 5: elektrische Maschine
- 6: erste Kupplung
- 7: zweite Kupplung
- 8: dritte Kupplung
- 9a: erster Kupplungsbestandteil der ersten Kupplung
- 9b: erster Kupplungsbestandteil der zweiten Kupplung
- 9c: erster Kupplungsbestandteil der dritten Kupplung
- 10a: zweiter Kupplungsbestandteil der ersten Kupplung
- 10b: zweiter Kupplungsbestandteil der zweiten Kupplung
- 10c: zweiter Kupplungsbestandteil der dritten Kupplung
- 11a: erster Nehmerzylinder
- 11b: zweiter Nehmerzylinder
- 11c: dritter Nehmerzylinder
- 12: erstes Stützlager
- 13: Drehachse
- 14: zweites Stützlager
- 15: erstes Reibelement
- 16: zweites Reibelement
- 17: Aktorgehäuse
- 18: radiale Außenseite
- 19a: erster Gehäusebereich
- 19b: zweiter Gehäusebereich
- 19c: dritter Gehäusebereich
- 20a: erster Kolben
- 20b: zweiter Kolben
- 20c: dritter Kolben
- 21a: erster Fluidraum
- 21b: zweiter Fluidraum
- 21c: dritter Fluidraum
- 22: Zwischenwand
- 23: Betätigungseinheit
- 24: Getriebeeinrichtung
- 25a: erste Getriebeeingangswelle
- 25b: zweite Getriebeeingangswelle
- 26: Zwischenplatte
- 27: Eingangsteil
- 28: Innenraum
- 29: Tragbereich
- 30: Antriebseinheit
- 31: erster Stützabschnitt
- 32: Tragabschnitt
- 33: Aufnahmeabschnitt
- 34: Stator
- 35: zweiter Stützabschnitt
- 36a: erster Reibelementeträger
- 36b: zweiter Reibelementeträger
- 37: Leitkanal
- 38: erster Lagerring
- 39: zweiter Lagerring
- 40: Lagerbereich
- 41: Absatz

## Patentansprüche

1. Kupplungsanordnung (1) für einen Antriebsstrang eines Kraftfahrzeuges, mit einem Gehäuse (2), einem relativ zu dem Gehäuse (2) drehbar gelagerten Träger (3), einer mit ihrem Rotor (4) drehfest an dem Träger (3) aufgenommenen elektrischen Maschine (5), mehreren Kupplungen (6, 7, 8), wobei jede Kupplung (6, 7, 8) mit einem Kupplungsbestandteil (9b, 9c, 10a) an dem Träger (3) drehfest aufgenommen ist, sowie zumindest einem betätigend auf eine Kupplung (6, 7, 8) einwirkenden Nehmerzylinder (11a, 11b), wobei ein, die Lagerung des Trägers (3) mit ausbildendes, erstes Stützlager (12) direkt zwischen dem Träger (3) und dem Gehäuse (2) angeordnet ist, wobei der Träger (3) mit einem weiteren, entlang einer Drehachse (13) des Trägers (3) beabstandet zu dem ersten Stützlager (12) angeordneten, zweiten Stützlager (14) ausgestattet ist, **dadurch gekennzeichnet, dass** das zweite Stützlager (14) zwischen dem Träger (3) und einem Aktorgehäuse (17) des zumindest einen Nehmerzylinders (11a, 11b) eingesetzt ist.

2. Kupplungsanordnung (1) nach Anspruch 1, **dadurch gekennzeichnet, dass** das erste Stützlager (12) zu einer ersten axialen Seite hin neben mehreren Reibelementen (15, 16) einer der Kupplungen (6, 7, 8) angeordnet ist und das zweite Stützlager (14) zu einer, der ersten axialen Seite abgewandten, zweiten axialen Seite hin neben den Reibelementen (15, 16) der Kupplung (6, 7, 8) angeordnet ist.

3. Kupplungsanordnung (1) nach Anspruch 1, **dadurch gekennzeichnet, dass** das zweite Stützlager (14) zwischen dem Träger (3) und einer radialen Außenseite (18) des Aktorgehäuses (17) eingesetzt ist.

4. Kupplungsanordnung (1) nach Anspruch 1 oder 3, **dadurch gekennzeichnet, dass** das Aktorgehäuse (17) zwei Nehmerzylinder (11a, 11b) aufweist, wobei zwei jeweils durch einen Gehäusebereich (19a, 19b) und einen Kolben (20a, 20b) begrenzte Fluidräume (21a, 21b) der Nehmerzylinder (11a, 11b) in radialer Richtung geschachtelt angeordnet sind.

5. Kupplungsanordnung (1) nach einem der Ansprüche 1 bis 4, **dadurch gekennzeichnet, dass** das zweite Stützlager (14) in axialer Richtung zumindest teilweise mit einem Fluidraum (21a, 21b) des zumindest einen Nehmerzylinders (11a, 11b) überlappend angeordnet ist.

6. Kupplungsanordnung (1) nach einem der Ansprüche 1 bis 5, **dadurch gekennzeichnet, dass** das erste Stützlager (12) an einer sich in radialer Richtung an dem Rotor (4) und/oder an mehreren Reibelementen (15, 16) zumindest einer Kupplung (6, 7, 8) vorbei erstreckenden Zwischenwand (22) des Gehäuses (2) aufgenommen ist.

7. Kupplungsanordnung (1) nach Anspruch 6, **dadurch gekennzeichnet, dass** in der Zwischenwand (22) eine Fluidversorgung einer eine erste Kupplung (6) betätigenden Betätigungseinheit (23) zumindest abschnittsweise vorgesehen ist.

8. Antriebseinheit (30) für einen Antriebsstrang eines Kraftfahrzeuges, mit einer Kupplungsanordnung (1) nach zumindest einem der Ansprüche 1 bis 7 sowie einer Getriebeeinrichtung (24), wobei zumindest eine Getriebeeingangswelle (25a; 25b) der Getriebeeinrichtung (24) mit einem Kupplungsbestandteil (10b, 10c) einer Kupplung (6, 7) der Kupplungsanordnung (1) drehfest verbunden ist.

9. Antriebseinheit (30) nach Anspruch 8, **dadurch gekennzeichnet, dass** die Getriebeeinrichtung (24) ein fest mit dem Gehäuse (2) der Kupplungsanordnung (1) verbundenes Getriebegehäuse aufweist und der zumindest eine Nehmerzylinder (11a, 11b) an einem getriebegehäusefesten Bereich aufgenommen ist.

## Claims

1. A coupling arrangement (1) for a powertrain of a motor vehicle, having a housing (2), a support (3) which is rotatably mounted relative to the housing (2), an electric machine (5) accommodated with its rotor (4) on the support (3) in a non-rotatable manner, multiple couplings (6, 7, 8), wherein each coupling (6, 7, 8) is accommodated on the support (3) with a coupling component (9b, 9c, 10a) in a non-rotatable manner, and at least one slave cylinder (11a, 11b) acting in an actuating manner on a coupling (6, 7, 8), wherein a first support bearing (12), which also forms the bearing of the support (3), is arranged directly between the support (3) and the housing (2), wherein the support (3) is provided with a further second support bearing (14) arranged along an axis of rotation (13) of the support (3) at a distance from the first support bearing (12), **characterised in that** the second support bearing (14) is inserted between the support (3) and an actuator housing (17) of the at least one slave cylinder (11a, 11b).

2. The coupling arrangement (1) according to claim 1, **characterised in that** the first support bearing (12) is arranged on a first axial side next to multiple friction elements (15, 16) of one of the couplings (6, 7, 8) and the second support bearing (14) is arranged on a second axial side facing away from the first axial side next to the friction elements (15, 16) of the coupling (6, 7, 8).

3. The coupling arrangement (1) according to claim 1, **characterised in that** the second support bearing (14) is inserted between the support (3) and a radial outer side (18) of the actuator housing (17).

4. The coupling arrangement (1) according to claim 1 or 3, **characterised in that** the actuator housing (17) has two slave cylinders (11a, 11b), wherein two fluid chambers (21a, 21b) of the slave cylinders (11a, 11b), each delimited by a housing region (19a, 19b) and a piston (20a, 20b), are arranged nested in the radial direction.

5. The coupling arrangement (1) according to any one of claims 1 to 4, **characterised in that** the second support bearing (14) is arranged such that it at least partially overlaps a fluid chamber (21a, 21b) of the at least one slave cylinder (11a, 11b) in the axial direction.

6. The coupling arrangement (1) according to any one of claims 1 to 5, **characterised in that** the first support bearing (12) is accommodated on an intermediate wall (22) of the housing (2) extending in the radial direction past the rotor (4) and/or past multiple friction elements (15, 16) of at least one coupling (6, 7, 8).

7. The coupling arrangement (1) according to claim 6, **characterised in that** a fluid supply for an actuating unit (23) actuating a first coupling (6) is provided at least in sections in the intermediate wall (22).

8. A drive unit (30) for a powertrain of a motor vehicle, having a coupling arrangement (1) according to at least one of claims 1 to 7 and a transmission device (24), wherein at least one transmission input shaft (25a; 25b) of the transmission device (24) is connected to a coupling component (10b, 10c) of a coupling (6, 7) of the coupling arrangement (1) in a non-rotatable manner.

9. The drive unit (30) according to claim 8, **characterised in that** the transmission device (24) has a transmission housing, which is fixedly connected to the housing (2) of the coupling arrangement (1) and the at least one slave cylinder (11a, 11b) is accommodated in a region which is fixed to the transmission housing.

## Revendications

1. Dispositif d'embrayage (1) pour une chaîne cinématique d'un véhicule automobile, comportant un carter (2), un support (3) monté rotatif par rapport au carter (2), une machine électrique (5) solidaire en rotation avec son rotor (4) logée sur le support (3), une pluralité d'embrayages (6, 7, 8), chaque embrayage (6, 7, 8) étant logé solidaire en rotation avec un élément constitutif d'embrayage (9b, 9c, 10a) sur le support (3) et au moins un cylindre récepteur (11a, 11b) agissant par actionnement sur un embrayage (6, 7, 8), dans lequel un premier palier d'appui (12), formant le logement du support (3) est agencé directement entre le support (3) et le carter (2), le support (3) étant équipé d'un autre second palier d'appui (14) agencé le long d'un axe de rotation (13) du support (3) à distance du premier palier d'appui (12), **caractérisé en ce que** le second palier d'appui (14) est inséré entre le support (3) et un carter d'actionneur (17) de l'au moins un cylindre récepteur (11a, 11b).

2. Dispositif d'embrayage (1) selon la revendication 1, **caractérisé en ce que** le premier palier d'appui (12) est agencé sur un premier côté axial à côté d'une pluralité d'éléments de friction (15, 16) de l'un des embrayages (6, 7, 8) et le second palier d'appui (14) est agencé sur un second côté axial opposé au premier côté axial à côté des éléments de friction (15, 16) de l'embrayage (6, 7, 8).

3. Dispositif d'embrayage (1) selon la revendication 1, **caractérisé en ce que** le second palier d'appui (14) est inséré entre le support (3) et un côté extérieur radial (18) du carter d'actionneur (17).

4. Dispositif d'embrayage (1) selon la revendication 1 ou 3, **caractérisé en ce que** le carter d'actionneur (17) comporte deux cylindres récepteurs (11a, 11b), dans lequel deux chambres à fluide (21a, 21b) des cylindres récepteurs (11a, 11b) délimitées par une zone de carter (19a, 19b) et un piston (20a, 20b) sont emboîtées dans la direction radiale.

5. Dispositif d'embrayage (1) selon l'une quelconque des revendications 1 à 4, **caractérisé en ce que** le second support d'appui (14) est agencé de manière à chevaucher au moins partiellement une chambre à fluide (21a, 21b) de l'au moins un cylindre récepteur (11a, 11b) dans la direction axiale.

6. Dispositif d'embrayage (1) selon l'une quelconque des revendications 1 à 5, **caractérisé en ce que** le premier palier d'appui (12) est monté sur une paroi intermédiaire (22) du carter (2) qui s'étend dans la direction radiale sur le rotor (4) et/ou sur plusieurs éléments de friction (15, 16) d'au moins un embrayage (6, 7, 8).

7. Dispositif d'embrayage (1) selon la revendication 6, **caractérisé en ce qu'**il est prévu, au moins dans certains endroits, dans la paroi intermédiaire (22), une alimentation en fluide d'une unité d'actionnement (23) actionnant un premier embrayage (6).

8. Unité d'entraînement (30) pour une chaîne cinématique d'un véhicule automobile, comportant un dispositif d'embrayage (1) selon au moins l'une des revendications 1 à 7 et un dispositif de transmission (24), dans laquelle au moins un arbre d'entrée de transmission (25a ; 25b) du dispositif de transmission (24) est relié solidaire en rotation à un élément constitutif d'embrayage (10b, 10c) d'un embrayage (6, 7) du dispositif d'embrayage (1).

9. Unité d'entraînement (30) selon la revendication 8, **caractérisée en ce que** le dispositif de transmission (24) comporte un carter de transmission qui est relié de manière fixe au carter (2) du dispositif d'embrayage (1) et l'au moins un cylindre récepteur (11a, 11b) est logé dans une zone fixée au carter de transmission.
